# EUROPÄISCHE PATENTSCHRIFT

(11) **EP 1 026 524 B1**
(45) Veröffentlichungstag und Bekanntmachung des Hinweises auf die Patenterteilung: **28.08.2002**
(21) Anmeldenummer: 99101807.8
(22) Anmeldetag: 28.01.1999
(51) Int. Cl.: G02B 5/20, B29D 11/00

(54) **Filterfolie zur Beobachtung der Sonne**
Filter foil for observing the sun
Film pour filtre d'observation du soleil

(43) Veröffentlichungstag der Anmeldung: 09.08.2000
(73) Patentinhaber: Baader Planetarium GmbH, 82291 Mammendorf (DE)
(72) Erfinder: Baader, Thomas, 82291 Mammendorf (DE)

(56) Entgegenhaltungen:
- US-A- 3 897 140
- US-A- 5 018 833

## Beschreibung

Die vorliegende Erfindung betrifft ein Folienfilter zur gefahrlosen Beobachtung der Sonne. Bei den erfindungsgemäßen Folienfiltern wird eine Verbesserung des Augenschutzes, des Sehkomforts und besonders der spektralen Gleichförmigkeit bei der Beobachtung der Sonne mit metallisierten Filterfolien durch zusätzliche farbige Beschichtung oder in Verbindung mit farbigen Folien erreicht.

### Stand der Technik (Hintergrund der Entwicklung):

Es ist bereits bekannt, metallisierte Polymerfolien zur Sonnenbeobachtung einzusetzen. Derartige Sonnenfilter werden z.B. in der US3,897,140 A beschrieben. Bei diesen Sonnenfiltern besteht das Trägermaterial aus farblosen Polymerfolien aus z.B. Polyethylen-Terephthalat, (sog. PET-Folien), welche mit einer Metallschicht bedampft sind.

Es sind auch Sonnenbeobachtungs-Brillen in Gebrauch, welche aus sogenannter "Rettungsfolie" oder "Deko-Folie" bestehen. Diese sind gelb oder sonstige bunt gefärbte Folien, welche einseitig mit Aluminium beschichtet wurden, um auf der anderen Seite eine Gold- oder sonstige farbige Beschichtung vorzutäuschen. Oft werden diese Folien mit der Behauptung beworben, daß sie einseitig "silbern" und auf der Gegenseite "golden" bedampft seien. Es müssen mehrere solcher Folien übereinander gelegt werden, welche - für die Sonnenbeobachtung angewendet - ein unscharfes Bild liefern, wobei vor allem der Goldfarbton die Reflexe der Metallisierung nur wenig oder gar nicht abdämpft. Diese Folien sind zudem auch meist nicht mit einer definierten optischen Dichte erhältlich.

Der Verwendungszweck dieser Folien ist nicht auf optische Durchsicht ausgelegt. Das Trägermaterial ist in der Regel inhomogen, mit Schlieren und Blasen durchsetzt, welche ein unscharfes Abbild bewirken. Diese Filter werden ohne Rücksicht auf ausreichende optische Eigenschaften hergestellt, welche zum direkten Blick in die Sonne zwingend notwendig sind. Die Verwendung mehrerer Lagen dieser Folien erfolgt pröbelnd, um die Lagenanzahl zu ermitteln, die einen Blick in die Sonne überhaupt ermöglichen.

Alle o.g. Filter erzeugen ein mehr oder weniger unscharfes, stark farbverfälschtes, meist bläuliches Bild der Sonne.

Diese Farbverfälschungen wirken insbesondere bei photographischen Farbaufnahmen störend. Außerdem treten durch die Metallisierung an der dem Auge zugewandten Seite des Filters störende Reflexe auf, welche die Beobachtung wesentlich beeinträchtigen, wenn die Folie direkt vor dem freien Auge angewandt werden soll.

Zur Beobachtung der Sonne werden auch sehr dunkle, durchgefärbte, nicht metallisierte Folien eingesetzt. Um die erforderliche optische Dichte zu erreichen, sind diese Polymerfilter relativ dick, was sich nachteilig auf die Abbildungsleistung und die optische Qualität des Sonnenbildes auswirkt. Diese Sonnenfilter ergeben meist ein rötliches bis orange/ bräunliches Bild der Sonne.

Um die notwendige spektrale Dichte zu erreichen (auch im augenschädigenden infraroten Spektralbereich) muß bei diesen Filtem aus "black Polymer" der rötlichbraune Farbton, sowie ein relativ dunkles Sonnenbild hingenommen werden.
In o.g. Spektralbereich sind die Sehzellen im menschlichen Auge jedoch bereits sehr konstrastunempfindlich, sodaß auch dadurch ein unbefriedigender Schärfeeindruck entsteht.

Die Patentschrift US 5,018,833 A beschreibt ein Neutralfilter für Laseranwendungen, bei welchem ein in Masse durchgefärbter Volumenabsorber auf einer Seite metallisiert und auf der anderen Seite mit einer Antireflexschicht versehen ist.

Ziel der vorliegenden Erfindung ist es daher, ein Folienfilter zur Sonnenbeobachtung bereitzustellen, welches die obengenannten Nachteile nicht aufweist. Insbesondere wird durch die erfindungsgemäßen Filter ein Sonnenbild mit höchster Bildqualität und ohne Färbverfälschungen erreicht und die Blendung des Beobachters durch reflektiertes Streulicht wird-durch augenseitige, dunkle Beschichtung oder gesondert beigelegte, dunkel lackierte oder dunkel durchgefärbte Folie - erheblich reduziert.

### Beschreibung der Erfindung

Die erfindungsgemäßen Filter bestehen aus einer Trägerfolie aus Polymerfilm sowie mindestens einer auf diesen Trägerfilm aufgebrachten Metallisierungsschicht, mit einer optischen Dichte OD des Folienfilters zwischen 2,2 und 6,5, **dadurch gekennzeichnet,** daß der Polymerfilm entweder dunkel durchgefärbt oder einseitig farbig lackiert ist, und daß mindestens zwei Metallisierungsschichten auf die Trägerfolie aufgebracht sind.
Die Trägerfolien bestehen aus Polymerfilm, z.B. Polyethylen-Terephthalat (PET-Folien), vorzugsweise in optischer Qualität, welcher nach üblichen Verfahren metallisiert wurde, z.B. wie . in der US3,897,140 A beschrieben.

Es können jedoch für alle Anwendungen in dieser Anmeldungsschrift auch andere Folientypen Verwendung finden, z.B. PET-Folien mit diversen Beimischungen, oder Beschichtungen (welche industriell aufgetragen werden um z.B. die Maschinengängigkeit während des Herstellungsprozesses zu verbessern - sog. koextrudierte Folien). Es können monomere Folien verwendet werden. Es können Folien aus Polycarbonat oder Acetat verwendet werden. Die optimal zu verwendende Folie wird durch ihre optischen Eigenschaften bestimmt.

Alternativ kann auch eine dunkel durchgefärbte oder dunkel, lackierte, bzw. mit Photolack von geeigneter spektraler Wirkung beschichtete Polymerfolie einseitig metallisiert werden und/oder mit einer zweiten, ebenfalls einseitig metallisierten Folie kombiniert werden. Hierbei wird der gleiche Effekt erzielt.

Die Herstellung der metallbedampften Filter erfolgt in üblichen Bedampfungsanlagen, wobei verschiedene Möglichkeiten bestehen, um die erfindungsgemäßen Effekte zu erreichen:
1.) Eine einzige, ggfs. optisch hochwertige Folie wird auf beiden Seiten bedampft. Dadurch muß das Licht der Sonne nur durch eine Trägerschicht und behält wesentlich höhere Qualität als bei Verwendung zweier oder weiterer Trägerschichten.
2.1.) Die Beschichtung der Folie mit dünnen Metallschichten kann dadurch geschehen, daß das Metall in sog. "Schiffchen" mit Hilfe von elektrischer Energie verdampft wird und sich auf der Hochvakuum laufenden Folienrolle niederschlägt und auskondensiert. Dies ist die meistens angewandte klassische Methode.
2.2.) Eine härtere Art der Beschichtung von Folie bietet das sog. "Sputtering", wo die Metalle unter erhöhter Energiezufuhr verdampft werden und, ebenfalls im Hochvakuum, als energiereiche Teilchen auf die Folie "aufschlagen" und so eine festere, höher kratzfeste Metallschicht ergeben.
   Beide Beschichtungsarten für Metalle können zur Metallisierung der Folie zur Anwendung kommen. Darüberhinaus können transparente oder dunkle Folien mit Metallen verschiedener spektraler Transmission verwendet werden (z.B. Aluminium (Al) in Verbindung mit Chrom (Cr) oder Chrom Nickel (NiCr).
2.3.) Es sollen stets zwei oder mehr Metallschichten für ein Sonnenfilter verwendet werden, um ggfs. Löcher in der Bedampfungsschicht auf ein ungefährliches Maß zu reduzieren.
   Die Metallschichten können auch zweimal auf die gleiche Seite des Trägerfilms bedampft werden. Auf diese Weise ist es z.B. möglich, eine einzige dunkle, in der Masse durchgefärbte Polymerfolie als Sonnenfilter zu verwenden und augenseitig eine dunkle, reflexarme Färbung zu erzielen.
   Die Anwendung der o.g. Techniken für die Herstellung von Sonnen-Folienfiltem ermöglicht eine wesentlich genauere Abstimmung der spektral korrekten Transmission des Sonnenlichtes, als mit anderen Arten der Folienkombination, da in der Masse durchgefärbte Folien in großen Mengen hergestellt werden müssen und daher nur in wenigen Farbtönen zur Verfügung stehen.
3.) Nachträglich wird die bedampfte Folie ggfs. bei einem Photofinischer auf handelsüblichen Lackiermaschinen mit einer geeigneten halbtransparenten oder transparenten Lackschicht versehen, die das bläuliche Bild, welches z.B. durch die Beschichtung mit Aluminium entsteht, zu einem neutralen Bild ausgleichen kann.

In der Photoindustrie sind derartige Herstellungsprozesse gängiger Standard. Für Farbfilter vor Kameraobjektiven wird von vielen Anbietern nicht etwa eine in der Masse durchgefärbte Folie als Filter verwendet, sondem eine transparente Standardfolie, welche rasch und in kleinen Mengen mit einer Vielzahl von verschiedenen transparenten oder lichtdämpfenden Lacken in Art einer Druckmaschine beschichtet werden kann, sodaß mehrere hundert verschiedene Farbtöne rasch produzierbar sind.

Durch die Erfindung, eine Lackschicht oder einen weiteren farbigen Polymerfilm direkt auf die verspiegelte Fläche aufzubringen (lose oder festverklebt), bietet sich die Möglichkeit, ein einlagiges Schutzfilter oder einen "Vorhalter" mit opt. Dichte 4,8 - 6,0 - beispielsweise zur Beobachtung der Sonne während einer Sonnenfinsternis - herzustellen, der den gewünschten Effekt bewirken kann, nämlich ein farbneutrales und nicht durch Reflexe gestörtes Sonnenbild zu erzeugen.
Bei den erfindungsgemäßen Filtern wird somit bereits mit einer einzigen Folienlage der nötige Dichtegrad an Metallisierung und Freiheit von Schichtfehlem in der Bedampfung erreicht, um gefahrlos die Sonne beobachten zu können.

Die erfindungsgemäßen Sonnenfilter können jedoch auch kombiniert und in mehreren Schichten angewandt werden, falls beispielsweise eine geringere Helligkeit des Sonnenbildes erwünscht wird oder andere Vorteile für die Herstellung aus mehreren Folienlagen sprechen.

### Alle mehrlagigen Folien können durch übliche Kaschierverfahren miteinander verklebt werden.

Die erfindungsgemäßen Filter können visuell oder photographisch verwendet werden. Sie können zur direkten Beobachtung der Sonne mit dem freien Auge als auch als Objektivsonnenfilter an Femrohren oder Feldstechern verwendet werden. Für photographische Verwendung ist der opt. Dichtebereich 2.2 bis 4.0 vorzuziehen, für visuelle Zwecke die opt. Dichte 4.8 bis 6.5. Besonders bevorzugt wird hierbei der Dichtebereich von 5.0 bis 5.5.

Die Filter können durch Zuschneiden in gewünschte Form gebracht und in gefaßter oder ungefaßter Form verwendet werden.

### Legende zu den Abbildungen welche ein Filter mit den o.g. Eigenschaften ergeben (siehe Blatt 1/1):

Lösungen mit einer einzigen Folienlage:
1.) Beidseitig, metallisierte (2,2'), transparente Folie (1), einseitig mit dunkler Photolackschicht (3) behandelt.
2.) Einseitig zweimal metallisierte (2,2') Folie (1), aus dunklem durchgefärbten Folienmaterial
3.) Einseitig, zweifach metallisierte (2,2') transparente Folie (1), mit nachträglich aufgebrachter Lackierung (3)
4.) Beidseitig, transparente metallisierte (2,2') Folie (1), wobei eine Seite mit Aluminium, die andere Seite jedoch mit Chrom (Cr) oder Nickelchrom (NiCr) bedampft wird (erfüllt die Forderung nach korrigierter Farbe des Sonnenbildes!). Besonders geeignet für die Verwendung am astronomischen Femrohr.
5.) Beidseitig metallisierte (2,2'), dunkel durchgefärbte Folie (1), wobei beide Seiten mit Aluminium bedampft sind. Besonders geeignet für die Verwendung am astronomischen Femrohr! Ebenfalls geeignet zur farblichen Korrektur des Sonnenbildes.

### Lösungen mit zwei Folienlagen:

6.) Beidseitig metallisierte (2,2') 'transparente Folie (1), augenseitig mit dunkler, durchgefärbter Folie (4) unterlegt.
7.) Beidseitig metallisierte (2,2'), transparente Folie (1), augenseitig mit transparenter (1), jedoch dunkel lackierter (3) Folie unterlegt.
8.) Einseitig metallisierte (2) Folie (1), augenseitig mit dunkel durchgefärbter, jedoch ebenfalls einseitig metallisierter (2') Folie (1') belegt.
9.) Zwei Lagen mit metallisierter (2,2') transparenter Folie, von denen eine Folie mit dunklem Lack (3) behandelt ist.
10.) Einseitig metallisierte (2) klare Folie (1), die mit einer sehr dunklen, durchgefärbten Folie (4) unterlegt ist.

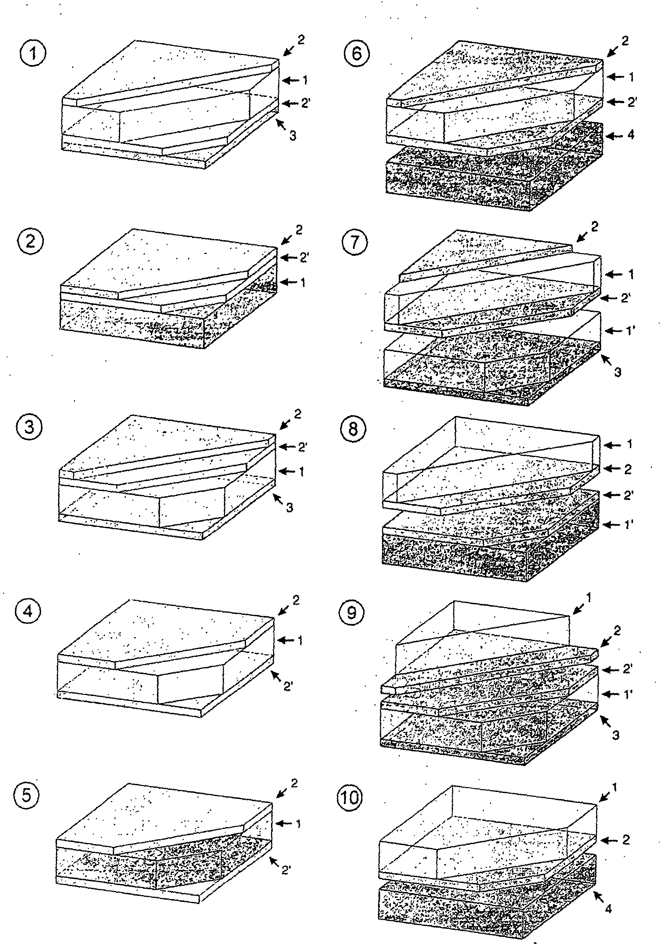

## Patentansprüche

1. Folienfilter zur Beobachtung der Sonne, bestehend aus einer Trägerfolie (1) aus Polymerfilm sowie mindestens einer auf diesen Trägerfilm aufgebrachten Metallisierungsschicht (2), mit einer optischen Dichte OD des Folienfilters zwischen 2,2 und 6,5, **dadurch gekennzeichnet, daß** der Polymerfilm entweder dunkel durchgefärbt oder einseitig farbig lackiert (3) ist, und daß mindestens zwei Metallisierungsschichten (2,2') auf die Trägerfolie aufgebracht sind.

2. Folienfilter nach Anspruch 1, wobei die Metallisierungsschichten (2,2') auf derselben Seite der Trägerfolie aufgebracht sind.

3. Folienfilter nach Anspruch 1, wobei die Metallisierungsschichten (2,2') auf jeweils einer Seite der Trägerfolie aufgebracht sind.

4. Folienfilter nach Anspruch 1, wobei unterschiedliche Metalle für die Metallisierungsschichten (2,2') verwendet werden.

5. Folienfilter nach Ansprüchen 1-4, wobei für die Metallisierung Aluminium (Al) und Chrom (Cr) oder Nickelchrom (NiCr) verwendet werden.

6. Folienfilter nach Ansprüchen 1-5, wobei die metallisierte Folie mit einer weiteren, durchgefärbten (4) oder lackierten Folie (1,3) lose unterlegt oder kaschiert wird.

7. Folienfilter nach Ansprüchen 1-5, wobei eine Lackschicht (3) oder ein weiterer farbiger Polymerfilm (4) direkt auf die metallisierte Fläche aufgebracht ist.

8. Komposit-Folienfilter bestehend aus zwei oder mehreren Lagen Folienfilter gemäß den vorhergehenden Ansprüchen, wobei die Folienlagen lose aufeinander gelegt oder miteinander verklebt oder kaschiert sein können.

9. Verwendung von Folienfiltern gemäß den vorhergehenden Ansprüchen zur Beobachtung der Sonne.

10. Verwendung von Folienfiltern nach Anspruch 9 in gefaßter oder ungefaßter Form.

## Claims

1. Film filter for the observation of the Sun, comprising a carrier film (1) of polymer film and at least one metal layer (2) applied onto said carrier film, with an optical density OD of said film filter of between 2.2 and 6.5, **characterized in that** the polymer film is dark coloured or coloured varnished (3) on one side, and **in that** at least two metal layers (2,2') are applied to the carrier film.

2. Film filter according to claim 1, wherein the metal layers (2,2') are applied to the same side of the carrier film.

3. Film filter according to claim 1, wherein the metal layers (2,2') are one on each side of the carrier film.

4. Film filter according to claim 1, wherein different metals are used for the metal layers (2,2').

5. Film filter according to claims 1-4, wherein aluminum (Al) and chromium (Cr) or nickel-chromium (NiCr) are used for the metallization.

6. Film filter according to claims 1-5, wherein the metallized film is overlaid or laminated with a further coloured (4) or varnished film (1,3).

7. Film filter according to claims 1-5, wherein a varnish layer (3) or a further coloured polymer film (4) is directly applied to the metallized surface.

8. Composite film filter comprising two or more layers of a film filter according to any of the preceding claims, wherein the film layers are loosely stacked or glued together or laminated.

9. Use of a film filter according to any of the preceding claims for the observation of the Sun.

10. Use of a film filter according to claim 9 in mounted or unmounted form.

## Revendications

1. Filtre pelliculaire pour l'observation du Soleil, comportant une feuille porteuse (1) en film polymère et au moins une couche de métallisation (2) appliquée sur ce film porteur, le filtre pelliculaire ayant une densité optique OD comprise entre 2,2 et 6,5, **caractérisé en ce que** le film polymère est soit teinté sombre soit laqué (3) coloré simple face, et **en ce qu'**au moins deux couches de métallisation (2,2') sont appliquées sur la feuille porteuse.

2. Filtre pelliculaire selon la revendication 1, dans lequel les couches de métallisation (2,2') sont appliquées sur la même face de la feuille porteuse.

3. Filtre pelliculaire selon la revendication 1, dans lequel les couches de métallisation (2,2') sont appliquées chacune sur une face de la feuille porteuse.

4. Filtre pelliculaire selon la revendication 1, dans lequel différents métaux sont employés pour les couches de métallisation (2,2').

5. Filtre pelliculaire selon les revendications 1 à 4, dans lequel l'aluminium (Al) et le chrome (Cr) ou le chrome-nickel (NiCr) sont employés pour la métallisation.

6. Filtre pelliculaire selon les revendications 1 à 5, dans lequel le film métallisé est placé libre sous, ou plaqué sur un autre film teinté (4) ou laqué (1,3).

7. Filtre pelliculaire selon les revendications 1 à 5, dans lequel une couche de laque (3) ou un autre film polymère coloré (4) est placé directement sur la surface métallisée.

8. Filtre pelliculaire composite comportant deux couches ou plus de filtres pelliculaires selon les revendications précédentes, dans lequel les couches pelliculaires peuvent être étendues librement l'une sur l'autre, collées ensemble ou plaquées.

9. Utilisation de filtres pelliculaires selon les revendications précédentes pour l'observation du Soleil.

10. Utilisation de filtres pelliculaires selon la revendication 9 sous forme montée ou non montée.
